Europäisches Patentamt

European Patent Office

Office européen des brevets

(11) Veröffentlichungsnummer : **0 060 930**
**B1**

# EUROPÄISCHE PATENTSCHRIFT

(45) Veröffentlichungstag der Patentschrift :
**19.12.84**

(51) Int. Cl.³ : **H 02 G 15/068**

(21) Anmeldenummer : **81109355.8**

(22) Anmeldetag : **30.10.81**

(54) Garnitur für das Ende eines Mittelspannungs- oder Hochspannungskabels.

(30) Priorität : **19.03.81 DE 3110660**

(43) Veröffentlichungstag der Anmeldung :
**29.09.82 Patentblatt 82/39**

(45) Bekanntmachung des Hinweises auf die Patenterteilung : **19.12.84 Patentblatt 84/51**

(84) Benannte Vertragsstaaten :
**AT BE CH FR GB IT LI LU NL SE**

(56) Entgegenhaltungen :
EP-A- 0 017 953
FR-A- 2 052 753
US-A- 3 517 113
PATENTS ABSTRACTS OF JAPAN, Band 2, Nr. 108,
Seite 5782E78, 8. September 1978
PATENTS ABSTRACTS OF JAPAN, Band 2, Nr. 108,
Seite 5781E78, 8. September 1978

(73) Patentinhaber : **Karl Pfisterer Elektrotechnische Spezialartikel GmbH & Co. KG
Augsburger Strasse 375
D-7000 Stuttgart 60 (DE)**

(72) Erfinder : **Bachmeier, Albert
Römersteinweg 17
D-7067 Plüderhausen (DE)**
Erfinder : **Schmitt, Franz
Rosenstrasse 16
D-7031 Holzgerlingen (DE)**
Erfinder : **Bäuerle, Gottfried
Postweg 2/5
D-7012 Schmiden (DE)**
Erfinder : **Schuster, Martin
Heidestrasse 51
D-7300 Esslingen (DE)**

(74) Vertreter : **Patentanwälte Phys. Bartels, Dipl.-Ing.
Fink Dipl.-Ing. Held
Lange Strasse 51
D-7000 Stuttgart 1 (DE)**

**Beschreibung**

Die Erfindung betrifft eine Garnitur für das Ende eines Mittelspannungs- oder Hochspannungskabels mit den im ersten Teil des Anspruches 1 enthaltenen Merkmalen.

Eine derartige Sperre erleichtert in erheblichem Maße die Herstellung einer Verbindung zwischen dem die Garnitur tragenden Kabel und einem anderen Kabel oder sonstigen Teil eines Energieversorgungsnetzes, weil der Verbindungsflansch des Gehäuses der Garnitur nicht unter Überwindung der Kraft der Feder gegen eine Anlagefläche gedrückt werden muß, um die Verbindungsschrauben anbringen zu können, mittels deren der Ringflansch gegen die Anlagefläche gedrückt und dort festgelegt wird. Erst beim Festziehen der Verbindungsschrauben wird die Feder über das durch die Sperre aufrechterhaltene Maß hinaus gespannt.

Die Ausbildung der Sperre ist bei den bekannten Garnituren der eingangs genannten Art unterschiedlich. Durch die JP-A-53 73388 ist es beispielsweise bekannt, den Schaft des trichterförmig ausgebildeten Druckkörpers längsverschiebbar durch die zentrale Öffnung einer Ringscheibe hindurchzuführen, an der die über den Umfang verteilt angeordneten, vorgespannten Schraubendruckfedern abgestützt sind. Das andere Ende der Federn, die um je einen die Ringscheibe längsverschiebbar durchdringenden Stift herumgelegt sind, drückt über einen am Stiftende vorgesehenen ringförmigen Körper gegen eine Schulter am konischen Teil des Trichters. Ein radial nach außen weisender Vorsprung am freien Ende des Schaftteils des trichterförmigen Druckkörpers begrenzt die Verschiebbarkeit des am Stiftende vorgesehenen ringförmigen Körpers relativ zur Ringscheibe und damit auch die Entspannung der Federn.

Konstruktiv etwas einfacher ist eine andere bekannte Lösung (JP-A-53-73387), bei welcher am freien Ende des Schaftteils des trichterförmigen Druckkörpers ein Flansch vorgesehen ist, von dessen dem Trichterteil abgekehrter Seite über den Umfang gleichmäßig verteilt Stehbolzen abstehen, die eine Ringscheibe durchdringen, an welcher das eine Ende der um die Stehbolzen gelegten Schraubendruckfedern anliegt, die andererseits am Druckkörperflansch abgestützt sind. Die Entspannung der Federn wird hier durch Muttern begrenzt, welche Anschläge für die Ringscheibe bilden.

Schließlich ist es noch bekannt (US-A-3 517 113), um den Schaftteil des trichterförmigen Druckkörpers eine Schraubendruckfeder zu legen, die einerseits an einer Schulter des Trichterteils und andererseits an einer über den Schaftteil geschobenen Ringscheibe abgestützt ist. Dabei begrenzt eine auf das Gewinde des Schaftteils aufgeschraubte Mutter die Entspannung der Feder. Das Gehäuse muß hierbei an dem dem Verbindungsflansch abgekehrten Ende eine Überwurfmutter aufweisen, deren zentrale Durchgangsöffnung größer als der Außendurchmesser der Mutter, aber kleiner als der Außendurchmesser der Ringscheibe ist. Alle diese bekannten Lösungen sind nicht nur aufwendig und haben in radialer Richtung einen relativ großen Raumbedarf ; sie sind außerdem für solche Garnituren ungeeignet, bei denen der Isolierkörper eine Ringelektrode aufweist, auf welche der Druckkörper zur Kontaktbildung ebenfalls eine axiale Belastung ausüben muß. Eine derartige Garnitur ist durch die EP-A-0 017 953 bekannt.

Der Erfindung liegt die Aufgabe zugrunde, eine Garnitur der eingangs genannten Art dahingehend zu verbessern, daß sie trotz Vorhandenseins einer Sperre zur Erleichterung der Montage, insbesondere der Herstellung einer Verbindung zwischen der Garnitur und einer Aufnahmebuchse oder dergleichen, einen sehr einfachen Aufbau hat und außerdem geeignet ist, auf eine an dem Isolierkörper mit dem zentralen Längskanal vorgesehene Elektrode die zur Kontaktbildung erforderliche axiale Belastung auszuüben.

Diese Aufgabe löst eine Garnitur mit den Merkmalen des Anspruches 1.

Dadurch, daß der Druckkörper in etwa die Form eines Hohlzylinders hat, ist sein Raumbedarf insbesondere in radialer Richtung minimal. Außerdem ermöglicht diese hohlzylindrische Form, die Sperre durch eine hülsenförmige Verlängerung des Druckkörpers zu bilden, so daß für die Sperre keine separaten, zusätzlichen Teile erforderlich sind, also auch die Sperre eine äußerst einfache Ausbildung hat. Durch die hohlzylindrische Form des Druckkörpers ist dieser ferner geeignet, eine im Bereich einer Ringschulter des Isolierkörpers vorgesehene Elektrode in axialer Richtung zu belasten. Daß der Druckkörper aus elektrisch isolierendem Material besteht, ist nicht nur insofern vorteilhaft, als es hierdurch besonders einfach ist, die hülsenförmige Verlängerung sind hierdurch auch in der Lage, eine Isolation zwischen dem Gehäuse und den aus dem Gehäuse längs der Außenmantelfläche des Kabels herauszuführenden Schirmdrähten oder Verbindungsleitungen zu bilden. Der Innendurchmesser des Druckkörpers und seiner Verlängerung sind deshalb vorzugsweise in einem das Herausführen dieser Drähte und Leitungen gestattenden Maße größer als der Außendurchmesser des aufzunehmenden Kabels. Es können dann beispielsweise ohne Schwierigkeiten Schirm- oder Kabelmantelmessungen durchgeführt werden. Trotz der Sperre ist der Zusammenbau der Garnitur äußerst einfach, weil hierzu der Druckkörper unter elastischer Verformung der hülsenförmigen Verlängerung nur so weit in das Gehäuse eingedrückt zu werden braucht, bis der Vorsprung, der zweckmäßigerweise als Schulter ausgebildet ist, das Gehäuseende hintergreift.

Liegt die Elektrode in einer gegen den Druckkörper hin offenen Ringnut in der Ringschulter, dann hat das gegen die Elektrode weisende Ende des Druckkörpers vorzugsweise ein ein Eindringen in die Ringnut bis zur Anlage an der Elektrode gestattendes Profil, damit keine zusätzlichen Bauteile erforderlich sind und insbesondere die Ringnut nach dem Einbringen der Elektrode nicht verschlossen zu werden braucht, was die Herstellungskosten vermindert. Da vorteilhafterweise die Elektrode durch eine auf die Wandung der Ringnut aufgebrachte, elektrisch leitende, dünne Schicht gebildet wird, ist vorzugsweise das Profil des gegen die Elektrode weisenden Endes des Druckkörpers an das Querschnittsprofil der Ringnut angepaßt. Man kann hierdurch in einfacher Weise einen guten Kontakt mit der Elektrode erzielen.

Vorzugsweise ist der Druckkörper auf einem Teil seiner Länge bis zu dem der Ringschulter des Isolierkörpers zugewandten Ende mit radial federnde Zungen bildenden Längsschlitzen versehen. Der Druckkörper kann sich dann an unterschiedliche Durchmesser des Isolierkörpers ohne weiteres anpassen. Unterschiedliche Durchmesser treten nicht nur infolge der Fertigungstoleranzen des Isolierkörpers auf, sondern auch infolge von unterschiedlichen Durchmessern der Kabelisolation, auf die der Isolierkörper aufgeschoben ist. Außerdem kann sich der Durchmesser der Kabelisolation mit der Kabeltemperatur ändern.

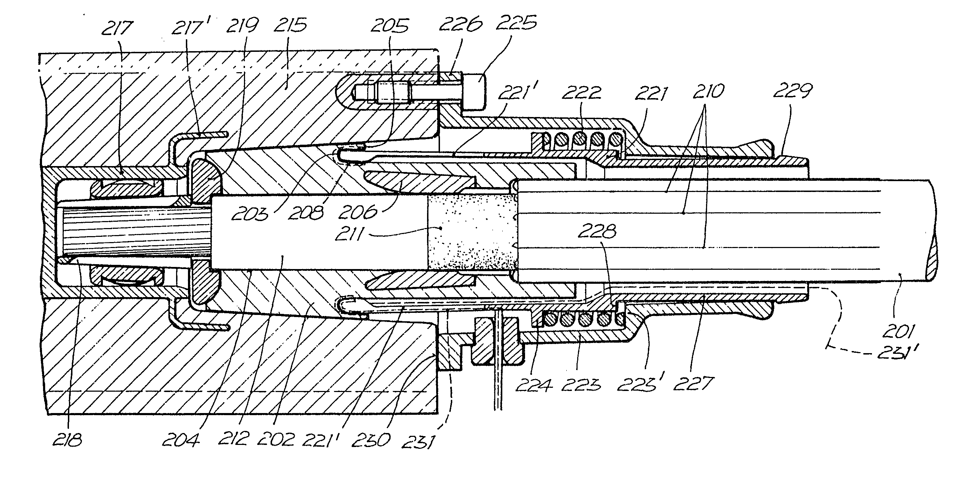

Im folgenden ist die Erfindung anhand eines in der Zeichnung dargestellten Ausführungsbeispiels im einzelnen erläutert. Die einzige Figur zeigt einen Längsschnitt des Ausführungsbeispiels im montierten Zustand.

Eine Garnitur in Form eines Kabelsteckers für Mittelspannung, nämlich 10 bis 20 kV weist einen Isolierkörper 202 aus Silikonkautschuk auf, welcher mit einem zentralen, sich über seine gesamte Länge erstreckenden Längskanal 204 versehen ist. In den Isolierkörper 202 ist ein Feldsteuerungskörper 206 eingebettet, der aus einem Silikonkautschukkern mit auf diesen aufgebrachter, elektrisch leitender Schicht besteht.

Der Isolierkörper liegt im montierten Zustand dicht an der freigelegten Kunststoffisolation 212 eines in üblicher Weise ausgebildeten, kunststoffisolierten Energieversorgungskabels 201 eines Energieversorgungsnetzes an. Die Leitschicht 211 dieses Kabels wird nur so weit von der Kunststoffisolation entfernt, daß sie noch vom Feldsteuerungskörper kontaktiert werden kann. Im Anschluß an den Feldsteuerungskörper 206 ist der Durchmesser des Längskanals 204 zum Kabel hin vergrößert, damit der Isolierkörper 202 nicht an der Leitschicht anliegt, dafür aber das Ende der Kabelummantelung sowie die zurückgebogenen und unter Anlage an der Kabelummantelung herausgeführten Schirmdrähte 210 übergreift. Die dem Kabelende zugewandte Stirnseite des Isolierkörpers 202 liegt im montierten Zustand des Kabelsteckers an einem Druckring 219 an, der auf die freigelegte Kabelseele aufgeschoben wird, ehe auf ihr ein radial federnder Steckkontaktkörper 218 festgelegt wird. Wie die Figur zeigt, hat der Isolierkörper 202 im wesentlichen in demjenigen Bereich, in dem er dicht an der Kunststoffisolation 212 anliegt, eine konische Außenmantelfläche, um eine elektrisch dichte Anlage an der entsprechend konisch ausgebildeten Wandung des Aufnahmekanals eines Buchsenkörpers 215 zu erzielen. Der aus einem Isoliermaterial bestehende Buchsenkörper 215 bildet einen Teil einer Steckbuchse. Daher ist im Buchsenkörper 215 im Anschluß an den konischen Aufnahmekanal eine Steckbuchse 217 angeordnet, die der Steckkontaktkörper 218 im eingesteckten Zustand kontaktiert und die mit einem nicht dargestellten Leiter verbindbar ist. Eine an die Steckbuchse angeformte Abschirmglocke 217′ übergreift den Druckring 219.

An den eine konische Außenmantelfläche bildenden Abschnitt des Isolierkörpers 202 schließt sich unter Bildung einer Ringschulter 205 ein im Durchmesser kleinerer, zylindrischer Abschnitt an, der sich bis zu dem dem Druckring 219 abgekehrten Ende des Isolierkörpers erstreckt. Eine den Längskanal 204 konzentrisch umgebende und zur Ringschulter 205 hin offene Ringnut 203 ist zur Bildung einer Ringelektrode 208 mit einem elektrisch leitenden Material ausgekleidet. Wie die Figur zeigt, hat die Ringnut 203 einen größeren Durchmesser als das den größten Durchmesser aufweisende Ende des Feldsteuerungskörpers 206 und ist so gegenüber diesem Ende des Feldsteuerungskörpers 206 gegen die am Druckring anliegende Stirnseite hin versetzt, daß die Ringelektrode 208 etwa im Bereich desjenigen Feldtrichters liegt, den der Feldsteuerungskörper definiert.

Den zylindrischen Abschnitt des Isolierkörpers 202 übergreift ein hülsenförmiger, aus elektrisch isolierendem Material bestehender Druckkörper 221, der auf einem Teil seiner Länge bis zu dem gegen die Ringschulter 205 weisenden Ende hin mehrfach in Längsrichtung geschlitzt ist. In diesem längsgeschlitzten Abschnitt bildet der Druckkörper 221 radial federnde Zungen 221′, deren freies Ende für einen Eingriff in die Ringnut 203 und eine gute Anlage an der Ringelektrode 208 als ein verdickter, in seiner Kontur an das Querschnittsprofil der Ringnut angepaßter Kopf ausgebildet ist. Infolge des Federungsvermögens der Zungen 221′ in radialer Richtung und der relativ geringen Wandstärke des den Kopf tragenden Teils der Zungen können sich die Zungen ohne Schwierigkeiten an den Durchmesser der Ringnut 203 anpassen, wodurch eine gute und gleichmäßige Anlage an der Ringelektrode und der Ringnut sichergestellt ist. Dies ist sowohl im Hinblick auf die Kontaktierung der Ringelektrode wichtig als auch im Hinblick auf die Übertragung der zu einer elektrisch dichten Anlage des Isolierkörpers 202 an der Kunststoffisolation 212 und am Buchsenkörper 215 erforderlichen Axialkraft.

Diese Axialkraft wird mittels einer vorgespannten Schraubendruckfeder 222 erzeugt, welche den Druckkörper 221 umgibt und sich einerseits an einer radial nach außen abstehenden Ringschulter 224 des Druckkörpers 221 und andererseits an einer Schulter 223' einer metallischen Kappe 223 abstützt, welche das Gehäuse des Kabelsteckers bildet. Wie die Figur zeigt, schließt sich an denjenigen Abschnitt der metallischen Kappe 223, welcher die Schraubenfeder 222 aufnimmt und welcher an seinem freien Ende mit einem mit Bohrungen für den Durchtritt von Verbindungsschrauben 225 versehenen Verbindungsflansch 226 versehen ist, unter Bildung der Schulter 223' ein Abschnitt an, dessen Innendurchmesser kleiner ist als der Außendurchmesser des Druckkörpers 221 in dem von der Schraubendruckfeder 222 umgebenen Bereich.

Durch diesen im Durchmesser kleineren, innen zylindrischen Abschnitt der metallischen Kappe 223 hindurch erstreckt sich eine hülsenartige Verlängerung 227 des Druckkörpers 221, welche einstückig mit letzterem ausgebildet ist, jedoch einen kleineren Außendurchmesser als dieser hat. Am Übergang zur Verlängerung ist eine Schulter 228 vorhanden, die der Schulter 223' gegenübersteht und deshalb die Verschiebbarkeit des Druckkörpers 221 relativ zur metallischen Kappe 223 entgegen der Kraft der Schraubendruckfeder 222 zur Zugentlastung begrenzt. In der entgegengesetzten Richtung ist die Verschiebbarkeit des Druckkörpers 221 relativ zur metallischen Kappe 223 ebenfalls formschlüssig begrenzt, und zwar durch einen umlaufenden nach außen gerichteten Vorsprung 229 an dem über das dem Verbindungsflansch 226 abgekehrte Ende der metallischen Kappe 223 überstehenden Endabschnitt der Verlängerung 227. Der Vorsprung 229 übergreift dieses Ende der metallischen Kappe 223. Im Ausführungsbeispiel ist die elastische Verformbarkeit der Verlängerung 227 so gewählt, daß die Verlängerung von der Seite des Verbindungsflansches her so weit durch die Kappe 223 hindurchgeschoben werden kann, bis der Vorsprung 229 das Kappenende hintergreift. Es wäre selbstverständlich auch möglich, durch Längsschlitze in der Verlängerung eine grössere radiale Federung der Nase zu erreichen.

Der Abstand des Vorsprungs 229 von der Schulter 228 ist so gewählt, daß der Verbindungsflansch 226 nur noch einen relativ geringen Abstand von seiner Anlagefläche 230 hat, bei der es sich im Ausführungsbeispiel um die Stirnfläche des Buchsenkörpers 215 handelt, wenn der konische Abschnitt des Isolierkörpers 202 bis zur allseitigen Anlage an der konischen Mantelfläche des Aufnahmekanals in diesen eingeführt ist. Hierfür ist kein nennenswerter Kraftaufwand erforderlich. Die Kraft der vorgespannten Schraubendruckfeder 222 braucht erst überwunden zu werden, wenn nun die Verbindungsschrauben 225 festgezogen werden. Bei der dabei erfolgenden Annäherung des Verbindungsflansches 226 an die Anlagefläche 230 bis zur Anlage an derselben erhöht sich die Kraft, mit der die Schraubenfeder die Köpfe der Zungen 221' in die Ringnut 203 drückt, auf den gewünschten Wert. Hierdurch wird eine elektrisch dichte Anlage des Isolierkörpers 202 sowohl an der Kunststoffisolation 212 als auch am Buchsenkörper 215 sichergestellt.

Außerdem wird hierdurch eine zuverlässige Kontaktierung der Ringelektrode 208 erreicht, wozu der Kopf wenigstens einer der Zungen 221' mit einem nicht dargestellten Kontaktelement versehen ist, von dem aus eine Verbindungsleitung 231 längs der Zunge 221' bis in die metallische Kappe 223 hinein geführt ist. Von ihr ist im Ausführungsbeispiel die Verbindungsleitung 231 durch die metallische Kappe 223 hindurch nach außen geführt. Die Verbindungsleitung 231 kann an eine Meß- oder Prüfeinrichtung angeschlossen werden. Man kann sie aber auch, wenn die Ringelektrode nicht zu Meß- oder Prüfzwecken benötigt wird, auf Erdpotential legen und dadurch die Ringelektrode zur Verbesserung der Feldsteuerung verwenden. Statt der durch eine Öffnung in der Wand der Kappe 223 herausgeführten Verbindungsleitung 231 kann auch eine durch den Ringraum zwischen dem Kabel 201 und dem Druckkörper 221 sowie dessen Verlängerung 227 herausgeführte Verbindungsleitung 231' vorgesehen sein.

Da die Schirmdrähte 210 durch die Verlängerung 227 des Druckkörpers 221 gegenüber der metallischen Kappe 223 isoliert sind, können mit ihrer Hilfe dann, wenn sie nicht geerdet sind, Schirm- oder Kabelmantelmessungen durchgeführt werden.

Beim Ziehen des Kabelsteckers nach dem Lösen der Verbindungsschraube 225 kann sich die Schraubendruckfeder 222 nur so weit entspannen, bis die Nase 229 in Anlage an der ihr zugekehrten Stirnseite der Kappe 223 ist.

**Ansprüche**

1. Garnitur für das Ende eines Mittelspannungs- oder Hochspannungskabels (201) mit einem einen zentralen Längskanal (204) für das Kabel (201) aufweisenden Isolierkörper (202), einem auf den Isolierkörper (202) aufschiebbaren den Isolierkörper (202) in Längsrichtung belastenden Druckkörper (221), wenigstens einer vorgespannten Feder (222), die einerseits am Druckkörper (221) und andererseits an einem den Druckkörper (221) und den Isolierkörper (202) wenigstens teilweise aufnehmenden Gehäuse (223) mit Verbindungsflansch (226) abgestützt ist, und einer die Entspannung der Feder(n) (222) und damit das Vorstehen des Druckkörpers (221) aus dem Gehäuse (223) im nicht montierten Zustand der Garnitur- unter Mitwirkung eines am Druckkörper (221) am vom Isolierkörper (202) abgewandten Ende radial nach außen gerichteten Vorsprunges (229) begrenzenden Sperre, dadurch gekennzeichnet, daß der Druckkörper (221) aus einem elektrisch isolierenden Material besteht und in etwa die Form eines Hohlzylinders hat, daß der hohlzylinderförmige Druckkörper (221) mit seinem dem Isolierkörper (202) zugewandten Ende an einer den Außenumfang des Isolierkörpers (202) ungebenden Ringschulter (205) angreift — dabei eine den zentralen Längskanal (204) ungebende Elektrode (208) kontaktierend —, daß das vom Isolierkörper (202) abgewandte, als hülsenförmige Verlängerung (227) ausgebildete Ende des Druckkörpers (221) in radialer Richtung elastisch verformbar ausgebildet ist und die Wand des Gehäuses (223) durchragt und daß der zur Bildung der genannten Sperre an dieser Verlängerung radial nach außen gerichtete Vorsprung (229) die Wand des Gehäuses (223) an der Kabeleinführungsstelle hintergreift.

2. Garnitur nach Anspruch 1, dadurch gekennzeichnet, daß der Innendurchmesser des Druckkörpers (221) und seiner Verlängerung (227) um ein die Herausführung von Schirmdrähten (210) an dem dem Verbindungsflansch (226) abgekehrten Ende gestattende Maß größer ist als der Außendurchmesser des aufzunehmenden Kabels (201).

3. Garnitur nach Anspruch 1 oder 2, dadurch gekennzeichnet, daß die Elektrode (208) in einer gegen den Druckkörper (221) hin offenen Ringnut (203) in der Ringschulter (205) liegt und das gegen die Elektrode (208) weisende Ende des Druckkörpers (221) ein ein Eindringen in die Ringnut (203) bis zur Anlage an der Elektrode (208) gestattendes Profil hat.

4. Garnitur nach Anspruch 3, dadurch gekennzeichnet, daß die Elektrode (208) durch eine auf die Wandung der Ringnut (203) aufgebrachte, elektrisch leitende Schicht gebildet ist und das Profil des gegen die Elektrode (208) weisenden Endes des Druckkörpers (221) an das Querschnittsprofil der Ringnut (203) angepaßt ist.

5. Garnitur nach einem der Ansprüche 1 bis 4, dadurch gekennzeichnet, daß der Druckkörper (221) auf einem Teil seiner Länge bis zu dem der Ringschulter (205) des Isolierkörpers (202) zugewandten Ende mit radial federnde Zungen (221′) bildenden Längsschlitzen versehen ist.

**Claims**

1. Fitting for the end of a medium voltage or high voltage cable (201), comprising an insulating member (202) having a central longitudinal channel (204) for the cable (201), a thrust member (221) designed to be pushed over the insulating member (202) and bearing against the insulating member (202) in the longitudinal direction, at least one prestressed spring (222) bearing at one end thereof against the thrust member (221) and at the other end against a housing (223) having a connecting flange (226) and at least partly containing the thrust member (221) and insulating member (202), and a locking device operating by means of a radially outwardly directed projection (229) on the thrust member (221), at the end remote from the insulating member (202), to limit the projection of the thrust member (221) from the housing (223) when the fitting is not assembled, characterised in that the thrust member (221) consists of an electrically insulating material and has substantially the form of a hollow cylinder, that the hollow cylindrical thrust member (221) bears with its end facing the insulating member (202) against an annular shoulder (205) surrounding the external circumference of the insulating member (202), and thus makes contact with an electrode (208) surrounding the central longitudinal channel (204), in that the end of the thrust member (221) facing away from the insulating member (202) to form a sleeve-like extension (227) is elastically deformable in the radial direction and extends through the wall of the housing (223) and in that the projection (229) directed radially outwardly on this extension to form the aforesaid locking device grips behind the wall of the housing (223) at the location of exit of the cable.

2. Fitting according to claim 1, characterised in that the internal diameter of the thrust member (221) and of its extension (227) is greater than the external diameter of the cable (201) contained in it by an amount allowing for the passage of screening wires (210) to the outside at the end remote from the connecting flange (226).

3. Fitting according to claim 1 or claim 2, characterised in that the electrode (208) lies in an annular groove (203) which is situated in the annular shoulder (205) and is open to the thrust member (221), and that end of the thrust member (221) which faces the electrode (208) has a profile enabling it to enter the annular groove (203) to contact the electrode (208).

4. Fitting according to claim 3, characterised in that the electrode (208) is formed by an electrically conductive layer applied to the wall of the annular groove (203), and the profile of that end of the thrust member (221) which faces the electrode (208) is adapted to the cross-sectional profile of the annular groove (203).

5. Fitting according to one of the claims 1 to 4, characterised in that the thrust member (221) is provided over part of its length, up to the end facing the annular shoulder (205) of the insulating member (202), with longitudinal slots forming tongues (221′) which are resilient in the radial direction.

**Revendications**

1. Garniture pour l'extrémité d'un câble de moyenne tension ou de haute tension (201) comprenant un corps isolant (202) qui présente un canal longitudinal central (204) pour recevoir le câble (201), un corps de pression (221) pouvant être emmanché sur le corps isolant (202) et qui charge le corps isolant (202) dans la direction longitudinale, au moins un ressort précontraint (222), qui est appuyé, d'un côté, contre le corps de pression (221) et, de l'autre côté, contre un boîtier (223) muni d'une bride d'assemblage (226) et qui reçoit au moins partiellement le corps de pression (221) et le corps isolant (202), et un arrêt qui limite la détente du ou des ressort(s) (222) et, de cette façon, le dépassement du corps de pression (221) en dehors du boîtier (223) dans l'état non monté de la garniture — en coopérant avec une saillie (229) prévue sur le corps de pression (221) et qui est dirigée radialement vers l'extérieur à l'extrémité de ce corps qui est à l'opposé du corps isolant (202), caractérisée en ce que le corps de pression (221) est fait d'une matière isolante de l'électricité et possède à peu près la forme d'un cylindre creux, en ce que le corps isolant (221) de forme cylindrique creuse attaque, par son extrémité dirigée vers le corps isolant (202), un épaulement annulaire (205) qui entoure la périphérie extérieure du corps isolant (202) — en entrant alors en contact avec une électrode (208) qui entoure le canal longitudinal central (204) —, en ce que l'extrémité du corps de pression (221) qui est à l'opposé du corps isolant (202) et est constituée par un prolongement (227) en forme de fourreau, est réalisée sous une forme élastiquement déformable dans la direction radiale et traverse la paroi du boîtier (223) et en ce que la saillie (229) dirigée radialement vers l'extérieur pour former ledit arrêt sur ce prolongement est engagée derrière la paroi du boîtier (223), dans la zone d'introduction du câble.

2. Garniture selon la revendication 1, caractérisée en ce que le diamètre intérieur du corps de pression (21) et de son prolongement (227) est supérieur au diamètre extérieur du câble (201) à recevoir dans une mesure qui permet de faire sortir les fils de blindage (210) à l'extrémité qui est à l'opposé de la bride d'assemblage (226).

3. Garniture selon la revendication 1 ou 2, caractérisée en ce que l'électrode (208) est située dans une gorge annulaire (203) formée dans l'épaulement annulaire (205), et qui s'ouvre vers le corps de pression (221) et en ce que l'extrémité du corps de pression (221) qui regarde vers l'électrode (208) possède un profil qui lui permet de pénétrer dans la gorge annulaire (203) jusqu'à entrer en contact avec l'électrode (208).

4. Garniture selon la revendication 3, caractérisée en ce que l'électrode (208) est formée par une couche conductrice de l'électricité déposée sur la paroi de la gorge annulaire (203) et en ce que le profil de l'extrémité du corps de pression (221) qui est dirigée vers l'électrode (208) est adapté au profil de la section de la gorge annulaire (203).

5. Garniture selon l'une des revendications 1 à 4, caractérisée en ce que le corps de pression (221) est muni de fentes longitudinales qui forment des languettes (221') à élasticité radiale sur une partie de sa longueur, jusqu'à l'extrémité dirigée vers l'épaulement annulaire (205) du corps isolant (202).